# EUROPÄISCHE PATENTSCHRIFT

(11) **EP 3 606 999 B1**
(45) Veröffentlichungstag und Bekanntmachung des Hinweises auf die Patenterteilung: **01.05.2024**
(21) Anmeldenummer: 18713654.4
(22) Anmeldetag: 26.03.2018
(51) Int. Cl.: C08L 67/02, B32B 7/02, B32B 9/02, B32B 9/04, B32B 23/08, B32B 23/04, B32B 27/08, B32B 27/20, B32B 27/22, B32B 27/28, B32B 27/30, B32B 27/32, B32B 27/34, B32B 27/36, C08J 5/18, C08L 67/00, C08L 101/16

(54) **BIOLOGISCH ABBAUBARE FOLIE, TRANSPORTBEUTEL ENTHALTEND EINE FOLIE, VERFAHREN ZUR HERSTELLUNG EINER FOLIE UND VERWENDUNG EINER FOLIE**
BIODEGRADABLE FILM, TRANSPORT BAG CONTAINING A FILM, METHOD OF MAKING A FILM AND USE OF A FILM
FILM BIODÉGRADABLE, SAC DE TRANSPORT CONTENANT UN FILM, PROCÉDÉ DE FABRICATION D'UN FILM ET UTILISATION D'UN FILM

(30) Priorität: 05.04.2017 DE 102017003340
(43) Veröffentlichungstag der Anmeldung: 12.02.2020
(73) Patentinhaber: bio-tec Biologische Naturverpackungen GmbH & Co. KG, 46446 Emmerich (DE)
(72) Erfinder: SCHMIDT, Harald, 46446 Emmerich (DE); MATHAR, Johannes, 7041 GP's-Heerenberg (NL); ROLOFF, Thorsten, 40789 Monheim (DE); FRIEDEK, Wolfgang, 47551 Bedburg-Hau (DE)
(74) Vertreter: Cohausz & Florack
(86) Internationale Anmeldenummer: PCT/EP2018/057669
(87) Internationale Veröffentlichungsnummer: WO 2018/184897

(56) Entgegenhaltungen:
- EP-A1- 1 008 629
- EP-A1- 1 491 585
- EP-A2- 1 193 294
- WO-A1-2016/079244
- DE-U1-202017 107 113
- US-A- 5 124 371
- US-A- 5 550 173

## Beschreibung

Die Erfindung betrifft eine Folie sowie ein Verfahren zu deren Herstellung. Ferner betrifft die Erfindung die Verwendung eines Polymerblends zur Herstellung einer Folie. Außerdem betrifft die Erfindung Transportbeutel.

Die Belastung der Weltmeere durch Plastikmüll ist ein bereits seit Jahrzehnten bekanntes und bis heute ungelöstes Problem. Vor allem für die Tiere im Meer stellt Plastik ein großes Problem dar. Die Tiere verfangen sich in größeren Plastikteilen und verwechseln kleine Plastikteile mit Nahrung, die sie nicht verdauen können. Vor allem besonders kleine Plastikteile, sogenanntes Mikroplastik, werden von Tieren über die Nahrung aufgenommen und landen so auch in der Nahrungskette der Menschen.

Ein großer Teil der in den Weltmeeren vorhandenen Plastikteile stammt von Kunststofftragetaschen ("Plastikbeuteln"), wie sie im täglichen Gebrauch, etwa zum Einkaufen, Verwendung finden. Die Begriffe "Kunststoff" und "Plastik" werden im Folgenden synonym verwendet.

Recycling, nachhaltiges Nutzen von Kunststoffprodukten und die Säuberung der Weltmeere stellen Ansätze dar, die zu einer Reduktion der Menge an Plastik in den Weltmeeren beitragen sollen. Die sicherste und nachhaltigste Lösung wäre aber, Plastikprodukte herstellen zu können, die unter den natürlichen Bedingungen, die in den Weltmeeren vorliegen, biologisch abgebaut werden.

Der biologische Abbau von Kunststoffprodukten im natürlichen Meerwasser (Salzwasser) ist wesentlich langwieriger und problematischer als der biologische Abbau in aktiven Medien wie Kompost bzw. bei höheren Temperaturen, wie sie in industriellen Kompostieranlagen vorliegen. Zum einen weist Kompost eine besonders hohe Konzentration von am Abbau beteiligten Mikroorganismen auf. Zum anderen haben industrielle Kompostieranlagen genau kontrollierte Bedingungen (z.B. Temperatur, Sauerstoffkonzentration), die einen optimalen biologischen Abbau des Komposts gewährleisten. Der Anspruch an Kunststoffprodukte, die sich in den natürlichen Bedingungen der Weltmeere biologisch abbauen lassen, ist somit ungleich höher als für andere Abbaubedingungen.

Hinzu kommt, dass Kunststoffprodukte neben einer guten biologischen Abbaubarkeit unter den natürlichen Bedingungen der Weltmeere auch noch anwendungsspezifische mechanische Eigenschaften aufweisen müssen. So müssen Transportbeutel aus Kunststoff beispielsweise ausreichende Zugfestigkeits- und Reißdehnungswerte aufweisen, um bestimmungsgemäß im Alltag gebraucht werden zu können. Nur dann kommen diese als Ersatz für traditionelle, biologisch nicht abbaubare Plastikprodukte in Betracht.

Die Kombination von (a) guter biologischer Abbaubarkeit einer Kunststofffolie in Meerwasser einerseits und (b) guten mechanischen Eigenschaften einer Kunststofffolie andererseits stellt sich in der Praxis als außerordentlich schwierig heraus. Bisherige Ansätze, diese beiden scheinbar gegensätzlichen Eigenschaften einer Folie in Einklang miteinander zu bringen, waren nur bedingt erfolgreich.

Die EP 2 913 362 A1 beschreibt eine Folie umfassend Polyhydoxyalkanoate und Polylactide, die einen verbesserten biologischen Abbau in einer Umwelt mit Mikroorganismen aufweist und gleichzeitig gute Lagerungsbeständigkeit, Festigkeit und Flexibilität besitzt. Der biologische Abbau ist allerdings nicht optimiert auf die besonders anspruchsvollen Abbaubedingungen in natürlichem Meerwasser.

Die EP 1 008 629 A1 beschreibt einen biologisch abbaubaren Polyesterharz umfassend 100 Gewichtsteile eines aliphatischen Polyesterharzes und 1-200 Gewichtsteile Polycaprolacton. Aus diesem Polymergemisch können eine Vielzahl von unterschiedlichen, biologisch abbaubaren Produkten hergestellt werden. Allerdings ist die biologische Abbaubarkeit nicht auf die besonders anspruchsvollen Abbaubedingungen in natürlichem Meerwasser eingestellt.

Keine der beschriebenen Folien löst zugleich das Problem der besonderen Herausforderung des biologischen Abbaus im Meerwasser und weist trotzdem zufriedenstellende mechanische Eigenschaften auf.

Die WO 2016/079244 A1 beschreibt eine mehrschichtige Polymerfolie mit einer Mittelschicht A, deren polymere Bestandteile in wässriger Lösung löslich sind, und jeweils mindestens einer, oberhalb und unterhalb der mindestens einen Mittelschicht A angeordnete, im wesentlichen wasserundurchlässigen Deckschicht B, C.

Ausgehend von dem zuvor beschriebenen Stand der Technik besteht die Aufgabe der Erfindung darin, eine Folie bereitzustellen, die eine sehr gute biologische Abbaubarkeit in Meerwasser aufweist und gleichzeitig hervorragende mechanische Eigenschaften aufweist. Vorzugsweise soll sich die Folie nach deren Einbringung in Meerwasser - gleichzeitig mit, vor oder nach Beginn des biologischen Abbaus der Folie(nteile) zu Kohlenstoffdioxid und Wasser - in kleinere Partikel zersetzen. Die Erfindung setzt sich außerdem zum Ziel, eine Folie bereitzustellen, die besonders geeignet ist zur Herstellung von Transportbeuteln.

Diese Aufgaben werden ganz oder teilweise durch die in Anspruch 1 angegebene Folie, die in Anspruch 6 angegebene Verwendung, das in Anspruch 8 angegebene Erzeugnis und das in Anspruch 10 angegebene Verfahren gelöst.

Vorteilhafte Ausgestaltungen der Erfindung sind in den abhängigen Ansprüchen angegeben und werden nachfolgend wie der allgemeine Erfindungsgedanke im Einzelnen erläutert.

Die erfindungsgemäße Folie zeichnet sich dadurch aus, dass diese 10 bis 50 Gew.-% einer Komponente A und 50 bis 90 Gew.% einer Komponente B, bezogen auf die Summe der Komponenten A und B, enthält, wobei Komponente A ausgewählt ist aus der Gruppe bestehend aus Polymeren, die aus ringöffnender Polymerisation erhältlich sind und eine Glasübergangstemperatur (Tg) niedriger als -30°C haben, wobei die Glasübergangstemperatur (Tg) die Mittenpunktstemperatur (T_{mg}) der Stufe des zweiten Aufheizschrittes im DCS Diagramm angibt und die Messung mit Aufheiz-Abkühlraten von jeweils 10 °C/min und einer Equilibrierzeit an den Temperaturendpunkten von jeweils zwei Minuten durchgeführt wird und Komponente B ausgewählt ist aus der Gruppe bestehend aus thermoplastischen aliphatischen Copolyestern und Mischungen davon, wobei die Folie als einschichtige Folie ausgebildet ist, wobei die Folie eine Gesamtdicke von 1 bis 200 um sowie mindestens eine der folgenden mechanischen Eigenschaften aufweist:
- Zugfestigkeit in trockenem Zustand in Extrusionsrichtung (MD) von mindestens 15 MPa gemäß EN ISO 527;
- Zugfestigkeit in trockenem Zustand quer zur Extrusionsrichtung (TD) von mindestens 15 MPa gemäß EN ISO 527;
- Reißdehnung in trockenem Zustand in Extrusionsrichtung (MD) von mindestens 100% gemäß EN ISO 527;
- Reißdehnung in trockenem Zustand quer zur Extrusionsrichtung (TD) von mindestens 100% gemäß EN ISO 527; und
wobei die Folie nach Einbringen in Salzwasser für einen Zeitraum von 12 Wochen unter kontrollierten Testbedingungen, gemäß der Methode ASTM D6691-09, nach Sieben durch ein Sieb mit einer Maschenweite von 2,0 mm maximal 30 Gew. % des ursprünglichen Trockengewichts aufweist und/oder wobei mindestens 30% des organischen Kohlenstoffs der Folie nach Einbringen in Salzwasser innerhalb von 180 Tagen bei einer Temperatur von 30 ± 2°C, gemäß der Methode ASTM D6691-09, in Kohlenstoffdioxid umgesetzt sind.

Überraschend hat sich gezeigt, dass die erfindungsgemäßen Folien sowohl hervorragende mechanische Eigenschaften wie hohe Zugfestigkeit und/oder hohe Reißdehnung und eine sehr gute biologische Abbaubarkeit in natürlichem Meerwasser aufweisen.

Ohne an eine wissenschaftliche Theorie gebunden sein zu wollen, erscheint die überraschende Wirkung der Erfindung auf die besonderen Eigenschaften der Kombination der Komponenten A und B zurückzuführen zu sein. Umfangreiche experimentelle Studien waren erforderlich, um geeignete Bestandteile und Verhältnisse für die Komponenten A und B zu finden. Wenn andere als die für die Komponenten A und B definierten Polymere miteinander kombiniert wurden, so wiesen die daraus hergestellten Folien entweder unzureichende mechanische Eigenschaften auf oder aber die biologische Abbaubarkeit der Folie in Meerwasser war unzureichend. Ferner ist es für die biologische Abbaubarkeit in Meerwasser und die mechanischen Eigenschaften der Folien unverzichtbar, dass das richtige Mengenverhältnis der Komponenten A und B gewählt wird.

Die Folie weist mindestens eine der folgenden mechanischen Eigenschaften auf:
- Zugfestigkeit in trockenem Zustand in Extrusionsrichtung (MD) von mindestens 15 MPa gemäß EN ISO 527;
- Zugfestigkeit in trockenem Zustand quer zur Extrusionsrichtung (TD) von mindestens 15 MPa gemäß EN ISO 527;
- Reißdehnung in trockenem Zustand in Extrusionsrichtung (MD) von mindestens 100% gemäß EN ISO 527;
- Reißdehnung in trockenem Zustand quer zur Extrusionsrichtung (TD) von mindestens 100% gemäß EN ISO 527.

Die vorgenannten mechanischen Eigenschaften werden vorzugsweise gemäß EN ISO 527-3:2003-07 bestimmt.

Die Folie weist nach Einbringen in Salzwasser für einen Zeitraum von 12 Wochen unter kontrollierten Testbedingungen, gemäß der Methode ASTM D6691-09, nach Sieben durch ein Sieb mit einer Maschenweite von 2,0 mm maximal 30 Gew.-% des ursprünglichen Trockengewichts auf und/oder mindestens 30% des organischen Kohlenstoffs der Folie sind nach Einbringen in Salzwasser innerhalb von 180 Tagen bei einer Temperatur von 30 ± 2°C, gemäß der Methode ASTM D6691-09, in Kohlenstoffdioxid umgesetzt.

Die Messung des Abbaus in Salzwasser nach kontrollieren Testbedingungen gemäß ASTM D6691-09 erfolgt vorzugsweise an Folien mit einer Dicke von 1 bis 100 µm, insbesondere von 10 bis 40 pm, noch bevorzugt mit einer Dicke von etwa 20 µm.

Erfindungsgemäß enthält die Folie 10 bis 50 Gew.-% einer Komponente A und 50 bis 90 Gew.-% einer Komponente B, bezogen auf die Summe der Komponenten A und B, wobei Komponente A ausgewählt ist aus der Gruppe bestehend aus Polymeren, die aus ringöffnender Polymerisation erhältlich sind und eine Glasübergangstemperatur (Tg) niedriger als -30°C haben und Komponente B ausgewählt ist aus der Gruppe bestehend aus thermoplastischen aliphatischen Copolyestern und Mischungen davon, wobei die Folie eine Gesamtdicke von 1 bis 200 um sowie mindestens eine der folgenden mechanischen Eigenschaften aufweist:
- Zugfestigkeit in trockenem Zustand in Extrusionsrichtung (MD) von mindestens 15 MPa gemäß EN ISO 527;
- Zugfestigkeit in trockenem Zustand quer zur Extrusionsrichtung (TD) von mindestens 15 MPa gemäß EN ISO 527;
- Reißdehnung in trockenem Zustand in Extrusionsrichtung (MD) von mindestens 100% gemäß EN ISO 527;
- Reißdehnung in trockenem Zustand quer zur Extrusionsrichtung (TD) von mindestens 100% gemäß EN ISO 527;
und wobei die Folie nach Einbringen in Salzwasser für einen Zeitraum von 12 Wochen unter kontrollierten Testbedingungen, gemäß der Methode ASTM D6691-09, nach Sieben durch ein Sieb mit einer Maschenweite von 2,0 mm maximal 30 Gew.-% des ursprünglichen Trockengewichts aufweist und/oder wobei mindestens 30% des organischen Kohlenstoffs der Folie nach Einbringen in Salzwasser innerhalb von 180 Tagen bei einer Temperatur von 30 ± 2 °C, gemäß der Methode ASTM D6691-09, in Kohlenstoffdioxid umgesetzt sind.

Die erfindungsgemäße Folie enthält eine Komponente A, die ausgewählt ist aus der Gruppe bestehend aus Polymeren, die aus ringöffnender Polymerisation erhältlich sind und eine Glasübergangstemperatur (Tg) niedriger als -30°C haben.

Methoden zur Bestimmung der Glasübergangstemperatur sind dem Fachmann bekannt. Beispielsweise kann die Glasübergangstemperatur mittels dynamischer Differenzkalorimetrie (Differential Scanning Calorimetry, DSC) bestimmt werden. Wird eine Polymerprobe einem definierten Aufheiz-/Abkühlprogramm unterzogen, so kann die Glasübergangstemperatur als Stufe im DSC Diagramm erkannt werden.

Für die Messung wird üblicherweise ein Temperaturprogramm, das aus einem Aufheiz-Abkühl-Aufheiz-Zyklus besteht, verwendet. Bei diesem Temperaturprogramm wird die Probe zunächst auf einer voreingestellten Anfangstemperatur für 2 min equilibriert. Nach dieser ersten Equilibrierphase wird die Probe mit einer gleichbleibenden Aufheizrate bis zu einer voreingestellten ersten Zieltemperatur erhitzt. Es wird eine Aufheizrate von 10 °C/min eingesetzt. Bei der ersten Zieltemperatur wird die Probe nochmals für 2 min equilibriert und anschließend mit einer konstanten Abkühlrate bis zu einer voreingestellten zweiten Zieltemperatur gekühlt. Es wird eine Abkühlrate von 10 °C/min eingesetzt. Bei der zweiten Zieltemperatur wird die Probe nochmals für 2 min equilibriert und anschließend mit einer gleichbleibenden Aufheizrate bis zu einer voreingestellten dritten Zieltemperatur erhitzt, auf welcher die Probe für 2 min konstant gehalten wird , bevor die Messung beendet wird. Es wird die gleiche Aufheizrate wie bei der ersten Aufheizphase, 10 °C/min, eingesetzt. Die erste und die dritte Zieltemperatur können gleich oder verschieden sein, ebenso können die Anfangs- und die zweite Zieltemperatur gleich oder verschieden sein.

Als Glasübergangstemperatur wird die Mittenpunktstemperatur T_{mg} der Stufe des zweiten Aufheizschritts im DSC Diagramm angegeben, wobei die Messung mit Aufheiz- und Abkühlraten von jeweils 10 °C/min und einer Equilibrierzeit an den Temperaturendpunkten von jeweils 2

Minuten durchgeführt wurde. Die Mittenpunktstemperatur T_{mg} ist beispielsweise in dem Lehrbuch "Praxis der Thermischen Analyse von Kunststoffen" von Gottfried W. Ehrenstein, Gabriela Riedel, Pia Trawiel, 2. Auflage, Carl Hanser Verlag, München 2003, Seite 9, definiert.

Wenn hier oder an anderer Stelle von Polymeren die Rede ist, die aus ringöffnender Polymerisation erhältlich sind, so sind damit Polymere gemeint, bei denen die Kettenpolymerisation eines zyklischen Monomers zum Polymer führt. Das zyklische Monomer kann vorzugsweise ein zyklischer Ester, ein zyklischer Ether, ein zyklisches Amid und/oder ein zyklisches Alken sein. Die Kettenpolymerisation des Monomers kann vorzugsweise katalytisch und/oder thermisch durchgeführt werden. Ein Katalysator für die ringöffnende Polymerisation kann ein Alkohol und/oder ein Diol sein.

Vorzugsweise weist Komponente A eine Glasübergangstemperatur (Tg) niedriger als -40°C, weiter bevorzugt niedriger als -50°C, besonders bevorzugt niedriger als -55°C auf. Nach einer weiteren vorteilhaften Ausführungsform der Erfindung ist Komponente A ein Polyester. Wenn Komponente A ein Polyester ist, kann dieser vorzugsweise durch ringöffnende Polymerisation eines zyklischen Esters, d.h. eines Lactons, erhalten werden.

Nach einer besonders vorteilhaften Ausführungsform der Erfindung wird als Komponente A Polycaprolacton eingesetzt. Wenn hier oder an anderer Stelle von Polycaprolacton die Rede ist, ist damit insbesondere Poly-ε-Caprolacton gemeint. Poly-ε-Caprolacton ist durch ringöffnende Polymerisation von ε-Caprolacton erhältlich.

Gemäß einer bevorzugten Ausführungsform der Erfindung weist Komponente A ein zahlenmittleres Molekulargewicht MW von 60.000 bis 120.000 g/mol, vorzugsweise von 70.000 g/mol bis 90.000 g/mol auf.

Neben Komponente A enthält die Folie mindestens eine weitere Komponente B. Erfindungsgemäß wird Komponente B ausgewählt aus der Gruppe bestehend aus thermoplastischen aliphatischen Copolyestern und Mischungen davon.

Gemäß einer bevorzugten Ausführungsform der Erfindung beträgt die Anzahl an Kohlenstoffatomen n pro Monomereinheit des thermoplastischen aliphatischen Copolyesters der Komponente B 4 bis 10. Besonders bevorzugt sind thermoplastische aliphatische Copolyester mit einer Anzahl n von Kohlenstoffatomen pro Monomereinheit von 4 bis 8, noch bevorzugter von 4 bis 6.

Gemäß einer weiteren bevorzugten Ausführungsform der Erfindung ist Komponente B ausgewählt aus der Gruppe an Polyestern bestehend aus Poly(3-hydroxybutyrat-co-3-hydroxyvalerat) (PHBV), Poly(3-hydroxybutyrat-co-3-hexanoat) (PHBH), Polybutylensuccinat (PBS), Poly(butylenadipat-cosuccinat) (PBSA) und Mischungen davon. Besonders bevorzugt wird als Komponente B Poly(3-hydroxybutyrat-co-3-hexanoat) und/oder Poly(butylenadipat-co-succinat) eingesetzt.

In einer weiteren bevorzugten Ausführungsform der Erfindung besteht Komponente B aus einem thermoplastischen, aliphatischen Polyester.

In einer anderen bevorzugten Ausführungsform der Erfindung besteht Komponente B aus mehreren unterschiedlichen thermoplastischen aliphatischen Polyestern, insbesondere aus zwei oder drei unterschiedlichen thermoplastischen aliphatischen Polyestern.

Besonders gute Ergebnisse stellen sich ein, wenn das als Komponente B eingesetzte Poly(3-hydroxybutyrat-co-3-hexanoat) einen Molanteil an 3-Hydroxyhexanoat von 5 bis 15 Mol%, vorzugsweise 7 bis 13 Mol% oder 10 bis 13 Mol%, jeweils bezogen auf die Gesamtmenge PHBH, aufweist.

Vorteilhafterweise weist der thermoplastische aliphatische Copolyester gemäß Komponente B ein zahlenmittleres Molekulargewicht MW von 70.000 bis 1.500.000 g/mol, vorzugsweise von 90.000 bis 1.000.000 g/mol, vorzugsweise von 100.000 bis 800.000 g/mol, weiter bevorzugt von 100.000 bis 700.000 g/mol, noch bevorzugter von 100.000 bis 600.000 g/mol auf.

In einer bevorzugten Ausführungsform der Erfindung, in der Poly(3-hydroxybutyrat-co-hexanoat) Teilbestandteil oder einziger Bestandteil der Komponente B der erfindungsgemäßen Folie ist, weist das Poly(3-hydroxybutyrat-co-hexanoat) vorzugsweise ein zahlenmittleres Molekulargewicht von 100.000 bis 1.500.000 g/mol, vorzugsweise von 200.000 bis 1.000.000 g/mol, weiter bevorzugt von 300.000 bis 800.000 g/mol, besonders bevorzugt von 400.000 bis 700.000 g/mol, ganz besonders bevorzugt von 500.000 bis 600.000 g/mol auf.

In einer bevorzugten Ausführungsform der Erfindung, in der Poly(butylenadipat-co-succinat) Teilbestandteil oder einziger Bestandteil der Komponente B der erfindungsgemäßen Folie ist, weist das Poly(butylenadipat-co-succinat) vorzugsweise ein zahlenmittleres Molekulargewicht von 50.000 bis 500.000 g/mol, weiter bevorzugt von 70.000 bis 400.000 g/mol, besonders bevorzugt von 90.000 bis 300.000 g/mol, ganz besonders bevorzugt von 100.000 bis 200.000 g/mol auf.

Die erfindungsgemäße Folie kann neben den Komponenten A und B noch weitere polymere Komponenten enthalten. Insbesondere kann die erfindungsgemäße Folie neben den Komponenten A und B Poly(butylenadipat-co-terephthalat) (PBAT) oder Poly(butylensebacat-co-terephthalat) (PBST) oder Mischungen daraus enthalten.

Gemäß einer Ausführungsform weist die Folie 0,1 bis 30 Gew.%, vorzugsweise 1 bis 25 Gew.-%, vorzugsweise 3 bis 20 Gew.%, weiter bevorzugt 4 bis 15 Gew.-%, besonders bevorzugt 5 bis 12 Gew.-% Poly(butylenadipat-co-terephthalat) und/oder Poly(butylensebacat-co-terephthalat) (PBST) auf. Gemäß einer weiteren Ausführungsform weist die Folie 15 bis 25 Gew.-%, vorzugsweise 17 bis 23 Gew.-%, besonders bevorzugt 18 bis 22 Gew.-% Poly(butylenadipat-co-terephthalat) und/oder Poly(butylensebacat-co-terephthalat) (PBST) auf.

Als weiteren Bestandteil kann die erfindungsgemäße Folie 0,1 bis 20 Gew.-%, vorzugsweise 2 bis 18 Gew.-%, weiter bevorzugt 5 bis 15 Gew.-%, besonders bevorzugt 8-12 Gew.-% Stärke enthalten.

Erfindungsgemäß kann als Stärke unter anderem thermoplastische Stärke, denaturierte Stärke und/oder Stärkederivate eingesetzt werden. Bevorzugt kann thermoplastische Stärke eingesetzt werden.

Für viele Anwendungszwecke ist es vorteilhaft, wenn die Folie eine Gesamtdicke von 5 bis 200 um, vorzugsweise von 10 bis 80 um, besonders bevorzugt von 15 bis 60 µm aufweist. Die Folie eignet sich in unterschiedlichen Dicken für die Herstellung unterschiedlicher Produkte. Folien in den genannten Dicken eignen sich insbesondere zur Herstellung von Tragetaschen und Transportbeuteln für den Alltagsgebrauch.

Die mechanischen Eigenschaften und die biologische Abbaubarkeit der erfindungsgemäßen Folie werden maßgeblich durch das Mengenverhältnis der Komponenten A und B bestimmt.

Die erfindungsgemäße Folie enthält 10 bis 50 Gew.-% einer Komponente A bezogen auf die Summe der Komponenten A und B. Gemäß einer bevorzugten Ausführungsform der Erfindung enthält die Folie 20 bis 40 Gew.-%, vorzugsweise 25 bis 40 Gew.-%, noch bevorzugt 25 bis 35 Gew.-% und besonders bevorzugt 28 bis 32 Gew.-% der Komponente A bezogen auf die Summe der Komponenten A und B.

Die erfindungsgemäße Folie enthält 50 bis 90 Gew.-% einer Komponente B bezogen auf die Summe der Komponenten A und B. In einer bevorzugten Ausführungsform der Erfindung enthält die Folie 60 bis 80 Gew.-%, vorzugsweise 60 bis 75 Gew.-%, noch bevorzugt 65 bis 75 Gew.-% und besonders bevorzugt 68 bis 72 Gew.-% der Komponente B, bezogen auf die Summe der Komponenten A und B.

Wenn hier oder an anderer Stelle von einer Komponente B die Rede ist, kann diese Komponente B aus einer Verbindung und/oder mehreren Verbindungen bestehen. In einer bevorzugten Ausführungsform der Erfindung besteht die Komponente B aus einer einzigen Verbindung. In einer weiteren bevorzugten Ausführungsform der Erfindung besteht die Komponenten B aus mehreren unterschiedlichen Verbindungen, insbesondere aus zwei oder drei unterschiedlichen Verbindungen.

Die erfindungsgemäße Folie zeichnet sich durch ausgezeichnete mechanische Eigenschaften aus, die ihren Einsatz in Transportbeuteln ermöglicht.

So weist die erfindungsgemäße Folie im trockenen Zustand vorzugsweise eine Reißdehnung in Extrusionsrichtung (MD, machine direction, Maschinenlaufrichtung), gemäß EN ISO 527, von mindestens 100% auf. In einer bevorzugten Ausführungsform der Erfindung beträgt die Reißdehnung in Extrusionsrichtung (MD), gemäß EN ISO 527, mindestens 150%, vorzugsweise mindestens 200%, bevorzugt mindestens 300%, besonders bevorzugt mindestens 400%.

Weiterhin weist die erfindungsgemäße Folie im trockenen Zustand vorzugsweise eine Reißdehnung entgegen der Extrusionsrichtung (TD, transverse direction, Querrichtung), gemäß EN ISO 527, von mindestens 100% auf. In einer bevorzugten Ausführungsform der Erfindung beträgt die Reißdehnung entgegen der Extrusionsrichtung (TD), gemäß EN ISO 527, mindestens 150%, vorzugsweise mindestens 200%, bevorzugt mindestens 300%, besonders bevorzugt mindestens 400%.

Zusätzlich weist die erfindungsgemäße Folie im trockenen Zustand vorzugsweise eine Zugfestigkeit in Extrusionsrichtung (MD) von mindestens 15 MPa, gemäß EN ISO 527, auf. Gemäß einer bevorzugten Ausführungsform der Erfindung beträgt die Zugfestigkeit in Exusionsrichtung (MD) der Folie im trockenen Zustand mindestens 20 MPa, vorzugsweise mindestens 25 MPa, besonders bevorzugt mindestens 30 MPa.

Außerdem weist die erfindungsgemäße Folie im trockenen Zustand vorzugsweise eine Zugfestigkeit entgegen der Extrusionsrichtung (TD) von mindestens 15 MPa, gemäß EN ISO 527, auf. Gemäß einer bevorzugten Ausführungsform der Erfindung beträgt die Zugfestigkeit entgegen der Exusionsrichtung (TD) der Folie im trockenen Zustand mindestens 20 MPa, vorzugsweise mindestens 25 MPa, besonders bevorzugt mindestens 30 MPa.

Vorteilhafterweise weist die Folie einen Dart-Drop Wert in trockenem Zustand von mindestens 4 g/µm, vorzugsweise von mindestens 5 g/um, besonders bevorzugt von mindestens 6 g/µm, gemäß der Methode ASTM D1709, auf.

Die erfindungsgemäße Folie zeichnet sich neben den hervorragenden mechanischen Eigenschaften auch durch eine sehr gute biologische Abbaubarkeit und schnelle Zersetzung in Salzwasser aus.

So weist die erfindungsgemäße Folie vorzugsweise nach Einbringen in Salzwasser für einen Zeitraum von 12 Wochen unter kontrollierten Testbedingungen, gemäß der Methode ASTM D6691-09, nach Sieben durch ein Sieb mit einer Maschenweite von 2,0 mm maximal 30 Gew.-% des ursprünglichen Trockengewichts auf.

In einer bevorzugten Ausführungsform der Erfindung weist die Folie nach Einbringen in Salzwasser für einen Zeitraum von 12 Wochen unter kontrollierten Testbedingungen, gemäß der Methode ASTM D6691-09, nach Sieben durch ein Sieb mit einer Maschenweite von 2,0 mm maximal 20 Gew.-%, vorzugsweise maximal 10 Gew.-% des ursprünglichen Trockengewichts auf.

Der Begriff Salzwasser bezieht sich hier auf ein natürliches Meerwassermedium nach Punkt 7.5.2 der Methode ASTM D6691-09.

Wenn hier oder an anderer Stelle die Methode ASTM D6691-09 erwähnt wird, ist damit die am 15. November 2009 erteilte Fassung mit dem Titel *"Standard Test Method for Determining Aerobic Biodegradation of Plastic Materials in the Marine Environment by a Defined Microbial Consortium or Natural Sea Water Inoculum"* gemeint.

Die erfindungsgemäße Folie besitzt eine hervorragende biologische Abbaubarkeit in Salzwasser. Mindestens 30% des organischen Kohlenstoffs der erfindungsgemäßen Folie sind vorzugsweise nach Einbringen der Folie in Salzwasser innerhalb von 180 Tagen bei einer Temperatur von 30 ± 2°C, gemäß der Methode ASTM D6691-09, in Kohlenstoffdioxid umgesetzt.

In einer bevorzugten Ausführungsform der Erfindung ist nach Einbringen der Folie in Salzwasser für 180 Tage bei einer Temperatur von 30 ± 2°C unter kontrollierten Testbedingungen, gemäß der Methode ASTM D6691-09, vorzugsweise mindestens 40%, besonders bevorzugt mindestens 50% des organischen Kohlenstoffs der Folie in Kohlenstoffdioxid umgesetzt. Der Begriff Salzwasser bezieht sich hier auf ein natürliches Meerwassermedium nach Punkt 7.5.2 der Methode ASTM D6691-09.

Der biologische Abbau der erfindungsgemäßen Folie findet nicht nur in den natürlichen Bedingungen von Meerwasser außergewöhnlich effektiv statt. In einer bevorzugten Ausführungsform der Erfindung ist der organische Kohlenstoff der Folie in aktiven Abbaubedingungen gemäß der Methode DIN EN ISO 14855-1:2012 innerhalb von 180 Tagen vorzugsweise zu mindestens 70%, weiter bevorzugt zu mindestens 80%, besonders bevorzugt zu mindestens 90% zu Kohlenstoffdioxid umgesetzt.

Der biologische Abbau der Folie im Meerwasser erfolgt in der Regel in zwei Schritten, welche entweder gleichzeitig oder zeitlich versetzt zueinander einsetzen. Zum einen zersetzt sich die erfindungsgemäße Folie im Meerwasser in kleinere Teile ("Fragmentierung"). Zum anderen werden die Plastikteile biologisch auf molekularer Ebene abgebaut, indem sie von Mikroorganismen zu Kohlenstoffdioxid und Wasser umgesetzt werden ("biologischer Abbau"). Häufig, aber nicht zwingend, setzt der "Fragmentierungs"-Schritt vor dem "biologischen Abbau"-Schritt ein.

Die erfindungsgemäße Folie ist einschichtig ausgebildet, da sich eine einschichtige Folie besonders einfach und kostengünstig herstellen und zu Transportbeuteln weiterverarbeiten lässt. Es ist jedoch auch möglich, dass die Folie eine oder mehrere gleiche oder unterschiedliche weitere Schichten umfasst. Die einzelnen Schichten einer Mehrschichtfolie können sich beispielsweise in ihrer Zusammensetzung und ihrer Dicke voneinander unterscheiden.

Die erfindungsgemäße Folie kann neben den genannten Bestandteilen weitere Bestandteile enthalten.

Die erfindungsgemäße Folie kann weiterhin beispielsweise Weichmacher enthalten. Beispiele für Weichmacher sind Glycerin, Sorbitol, Arabinose, Lycose, Xylose, Glykose, Fructose, Mannose, Allose, Altrose, Galactose, Gulose, Iodose, Inosit, Sorbose, Talit und Monoethoxylat-, Monopropoxylat- und Monoacetat-Derivate hiervon sowie Ethylen, Ethylenglykol, Propylenglykol, Ethylendiglykol, Propylendiglykol, Ethylentriglykol, Propylentriglykol, Polyethylenglykol, Polypropylenglykol, 1,2-Propandiol, 1,3-Propandiol, 1,2-, 1,3-, 1,4-Butandiol, 1,5-Pentandiol, 1,6-,1,5-Hexandiol, 1,2,6-, 1,3,5-Hexantriol, Neopentylglykol, Trimethylopropan, Pentaerithritol, Sorbit und deren Acetat-, Ethoxylat- und Propoxylat-derivate und Mischungen daraus.

Vorzugsweise ist die erfindungsgemäße Folie frei von oligomeren Esterverbindungen mit einem gewichtsmittleren Molekulargewicht von 500 bis 5000 g/mol, insbesondere von Poly(1,3-butylenglycol-co-1,2-propylenglycoladipisäure) terminiert mit 2-Ethylhexanol, Poly(neopentylglycol-co-1,4-butylenglycoladipinsäure) terminiert mit 2-Ethylhexanol, Poly(1,3-butylenglycoladipinsäure) nicht-terminiert, Poly(1,2-propylenglycoladipinsäure-co-phthalsäure) terminiert mit 2-Ethylhexanol, Poly(neopentylglycoladipinsäure) terminiert mit 2-Ethylhexanol, Poly(1,2-Propylenglycoladipinsäure-co-phthalsäure) terminiert mit 2-Ethylhexanol, Poly(1,3-butylenglycoladipinsäure) terminiert mit gemischten Fettsäuren, Poly(1,2-propylenglycoladipinsäure) terminiert mit 2-Ethylhexanol, Poly(1,2-propylenglycol-co-1,4-butylenglycoladipinsäure) terminiert mit 2-Ethylhexanol, Poly(1,4-butylenglycoladipinsäure) oder Poly(1,4-butylenglycol-co-ethylenglycoladipinsäure), jeweils mit einem gewichtsmittleren Molekulargewicht von 500 bis 5000 g/mol.

Ferner kann die erfindungsemäße Folie Dispergierhilfen wie z.B. Detergentien, Schmelzstabilisatoren, Verarbeitungshilfsmittel, Stabilisatoren, Antioxidationsmittel, Antiflammmittel, Antiblockmittel, Füllstoffe und/oder Additive enthalten.

Darüber hinaus kann die erfindungsgemäße Folie zusätzlich weitere Polymere wie zum Beispiel Polyethylenglykol, Polyvinylalkohol, Chitin, Chitosan, Cellulose, Cellulosederivate, Polyester, Polydimethylaminoethylmethacrylat und Mischungen davon enthalten.

Gemäß einer weiteren bevorzugten Ausführungsform der Erfindung enthält die erfindungsgemäße Folie ein oder mehrere Füllstoffe und/oder ein oder mehrere Zerfallsmittel. Abhängig von Art und Menge an Füllstoff und/oder Zerfallsmittel kann die Zerfallsgeschwindigkeit der erfindungsgemäßen Folie beeinflusst werden.

Bevorzugte Füllstoffe für diesen Zweck sind ausgewählt aus der Gruppe bestehend aus Calciumcarbonat, Talkum, Kaolin, Dolomit, Glimmer, Kieselsäure und Mischungen davon. Zerfallsmittel sind dem Fachmann bekannt. Bevorzugte Zerfallsmittel für diesen Zweck sind ausgewählt aus der Gruppe bestehend aus Natriumhydrogencarbonat, Alginsäure, Calciumalginat, Natriumalginat, mikrokristalline Cellulose, Natriumcarboxymethylcellulose, Stärke, Natriumcarboxymethylstärke, Polyvinylpyrrolidon und Mischungen davon. Stärke kann nativ oder destrukturiert vorliegen.

Die Erfindung betrifft ferner die Verwendung eines Polymerblends, enthaltend 10 bis 50 Gew.-% einer Komponente A und 50 bis 90 Gew.-% einer Komponente B, bezogen auf die Summe der Komponenten A und B,
wobei Komponente A ausgewählt ist aus der Gruppe bestehend aus Polymeren, die aus ringöffnender Polymerisation erhältlich sind und eine Glasübergangstemperatur (Tg) niedriger als -30 °C haben, wobei als Glasübergangstemperatur (Tg)die Mittenpunktstemperatur (Tmg) der Stufe des zweiten Aufheizschrittes im DCS Diagramm angegeben ist und die Messung mit Aufheiz-Abkühlraten von jeweils 10 °C/min und einer Equilibrierzeit an den Temperaturendpunkten von jeweils zwei Minuten durchgeführt wird und Komponente B ausgewählt ist aus der Gruppe bestehend aus thermoplastischen aliphatischen Copolyestern und Mischungen davon, zur Herstellung einer Folie mit einer Gesamtdicke von 1 bis 200 um und mindestens einer der folgenden mechanischen Eigenschaften:
   - Zugfestigkeit in trockenem Zustand in Extrusionsrichtung (MD) von mindestens 15 MPa gemäß EN ISO 527;
   - Zugfestigkeit in trockenem Zustand quer zur Extrusionsrichtung (TD) von mindestens 15 MPa gemäß EN ISO 527;
   - Reißdehnung in trockenem Zustand in Extrusionsrichtung (MD) von mindestens 100% gemäß EN ISO 527;
   - Reißdehnung in trockenem Zustand quer zur Extrusionsrichtung (TD) von mindestens 100% gemäß EN ISO 527;
wobei die Folie als einschichtige Folie abgebildet ist, und wobei die Folie nach Einbringen in Salzwasser für einen Zeitraum von 12 Wochen unter kontrollierten Testbedingungen, gemäß der Methode ASTM D6691-09, nach Sieben durch ein Sieb mit einer Maschenweite von 2,0 mm maximal 30 Gew.-% des ursprünglichen Trockengewichts aufweist und/oder wobei mindestens 30% des organischen Kohlenstoffs der Folie nach Einbringen in Salzwasser innerhalb von 180 Tagen bei einer Temperatur von 30 ± 2 °C, gemäß der Methode ASTM D6691-09, in Kohlenstoffdioxid umgesetzt sind.

Für die Komponenten A und B der erfindungsgemäßen Verwendung gilt das zu den Komponenten A und B der erfindungsgemäßen Folie Gesagte jeweils entsprechend. Ferner kann der Polymerblend einen oder mehrere der vorgenannten Bestandteile enthalten.

Vorzugsweise enthält der Polymerblend 20 bis 40 Gew.-%, 25 bis 40 Gew.-%, 25 bis 35 Gew.-% oder 28 bis 32 Gew.-% der Komponente A, bezogen auf die Summe der Komponenten A und B. Ferner enthält der Polymerblend vorzugsweise 60 bis 80 Gew.%, 60 bis 75 Gew.-%, 65 bis 75 Gew.-% oder 68 bis 72 Gew.-% der Komponente B, bezogen auf die Summe der Komponenten A und B.

Gegenstand der Erfindung sind außerdem auch Erzeugnisse, die mit der erfindungsgemäßen Folie hergestellt oder herstellbar sind.

Von besonderer Bedeutung sind Transportbeutel, die aus der erfindungsgemäßen Folie hergestellt oder herstellbar sind. Die erfindungsgemäßen Folien eignen sich zur Herstellung von Transportbeuteln jeglicher Art, einschließlich Tragetaschen, Obstbeutel, Gemüsebeutel, Light T-Shirt Bags und Ultra-Light T-Shirt Bags.

Die unterschiedlichen Arten von Transportbeuteln können je nach Anwendungszweck ein unterschiedliches Gewicht aufweisen.

In einer bevorzugten Ausführungsform der Erfindung weist beispielsweise ein erfindungsgemäßer Transportbeutel ein Gewicht von vorzugsweise 1 bis 90 g, weiter bevorzugt 2 bis 50 g oder besonders bevorzugt 20 bis 40 g. Für andere Anwendungen eignen sich besonders erfindungsgemäße Transportbeutel, die ein Gewicht von vorzugsweise 1 bis 10 g, besonders bevorzugt 1,5 bis 5 g aufweisen.

Die Erfindung betrifft schließlich auch ein Verfahren zur Herstellung einer Folie. Das erfindungsgemäße Verfahren zur Herstellung einer Folie umfasst mindestens folgende Schritte:
a. Bereitstellen eines Polymerblends enthaltend 10 bis 50 Gew.-% einer Komponente A und 50 bis 90 Gew.-% einer Komponente B, bezogen auf die Summe der Komponenten A und B;
   wobei Komponente A ausgewählt ist aus der Gruppe bestehend aus Polymeren, die aus ringöffnender Polymerisation erhältlich sind und eine Glasübergangstemperatur (Tg) niedriger als -30 °C haben,wobei als Glasübergangstemperatur (Tg)die Mittenpunktstemperatur (Tmg) der Stufe des zweiten Aufheizschrittes im DCS Diagramm angegeben ist und die Messung mit Aufheiz-Abkühlraten von jeweils 10 °C/min und einer Equilibrierzeit an den Temperaturendpunkten von jeweils zwei Minuten durchgeführt wird und Komponente B ausgewählt ist aus der Gruppe bestehend aus thermoplastischen aliphatischen Copolyestern und Mischungen davon;
b. Ausbilden einer Folie aus dem Polymerblend gemäß Schritt a,
   wobei die Folie als einschichtige Folie ausgebildet ist, wobei die Folie eine Gesamtdicke von 1 bis 200 um sowie mindestens eine der folgenden mechanischen Eigenschaften aufweist:
      - Zugfestigkeit in trockenem Zustand in Extrusionsrichtung (MD) von mindestens 15 MPa gemäß EN ISO 527;
      - Zugfestigkeit in trockenem Zustand quer zur Extrusionsrichtung (TD) von mindestens 15 MPa gemäß EN ISO 527;
      - Reißdehnung in trockenem Zustand in Extrusionsrichtung (MD) von mindestens 100% gemäß EN ISO 527;
      - Reißdehnung in trockenem Zustand quer zur Extrusionsrichtung (TD) von mindestens 100% gemäß EN ISO 527;
         und
   wobei die Folie nach Einbringen in Salzwasser für einen Zeitraum von 12 Wochen unter kontrollierten Testbedingungen, gemäß der Methode ASTM D6691-09, nach Sieben durch ein Sieb mit einer Maschenweite von 2,0 mm maximal 30 Gew. % des ursprünglichen Trockengewichts aufweist und/oder wobei mindestens 30% des organischen Kohlenstoffs der Folie nach Einbringen in Salzwasser innerhalb von 180 Tagen bei einer Temperatur von 30 ± 2°C, gemäß der Methode ASTM D6691-09, in Kohlenstoffdioxid umgesetzt sind.

Geeignete Verfahren zur Ausbildung einer Folie gemäß Schritt b. sind dem Fachmann allgemein bekannt und umfassen typischerweise einen Extrusionsschritt (insbesondere einen Coextrusionsschritt) und/oder einen Kaschierungsschritt.

Für die Komponenten A und B des erfindungsgemäßen Verfahrens gilt das zu den Komponenten A und B der erfindungsgemäßen Folie Gesagte jeweils entsprechend. Ferner kann der Polymerblend einen oder mehrere der vorgenannten Bestandteile enthalten.

Vorzugsweise enthält der Polymerblend 20 bis 40 Gew.-%, 25 bis 40 Gew.-%, 25 bis 35 Gew.-% oder 28 bis 32 Gew.-% der Komponente A, bezogen auf die Summe der Komponenten A und B. Ferner enthält der Polymerblend vorzugsweise 60 bis 80 Gew.%, 60 bis 75 Gew.-%, 65 bis 75 Gew.-% oder 68 bis 72 Gew.-% der Komponente B, bezogen auf die Summe der Komponenten A und B.

Die Erfindung wird im Folgenden anhand von Ausführungsbeispielen näher erläutert.

### Beispiele

Für die Vergleichs- und Ausführungsbeispiele wurden folgende Materialien verwendet: Poly(butylensuccinat-co-adipat), PBSA (BioPBS FD92PM, PTT MCC Biochem Company Limited); Polycaprolacton, PCL (Capa 6800, Perstorp); Poly(hydroxybutyrat-co-hexanoat), PHBH (AONILEX 151N; KANEKA); Erucasäureamid (LOXIOL E SPEZ P, Emery Oleochemicals).

### Beispiel 1:

Mit einem Doppelschneckenextruder des Typs Coperion ZSK 40 (zweiwelliger Schneckenkneter), Schneckendurchmesser 40 mm, L/D = 42, wurde ein Polymerblend mit der in Tab. 1 angegebenen Rezeptur A hergestellt und zu Granulat verarbeitet (dosierte Anteile in Massenprozent):

**Tab. 1: Rezeptur A**

| Verbindung | Menge |
|---|---|
| PCL | 29, 7 |
| PBSA | 69, 3 |
| Loxiol | 1 |

Dabei wurden folgende Compoundierparameter eingehalten:

**Tab. 2: Temperaturprofil (Doppelschneckenextruder ZSK 40)**

| Zone 1 | Zone 2 | Zone 3 | Zone 4 | Zone 5 | Zone 6 | Zone 7 | Zone 8 | Zone 9 | Zone 10 | Düse |
|---|---|---|---|---|---|---|---|---|---|---|
| 25 °C | 100 °C | 110 °C | 115 °C | 130 °C | 145 °C | 160 °C | 160 °C | 160 °C | 160 °C | 160 °C |

| | |
|---|---|
| Drehzahl | 100 min⁻¹ |
| Durchsatz | 50 kg/h |
| Entgasung | - 0,96 bar, Zone 8 |
| Wassergehalt | 0,07 % |

Aus dem hergestellten Granulat wurden Blasfolien hergestellt. Hierfür wurde das Granulat A mit einem Einwellenextruder des Typs KABRA, Schneckendurchmesser 65 mm, L/D = 23, aufgeschmolzen und zu einer Blasfolie verarbeitet.

Für die Untersuchung der Haltbarkeit der Folie in Wasser wurden Proben der Folie in Diarahmen eingespannt und in natürliches Meerwasser eingelegt. Die Zersetzung der Folie wurde visuell begutachtet. In Tab. 3 ist die relative Zersetzung der Folie innerhalb eines Zeitraums von 72 Tagen in Meerwasser dokumentiert.

**Tab. 3: Relative Zersetzung der Folie erhältlich aus Granulat A**

| Tage | Zersetzung |
|---|---|
| 0 | 1 |
| 22 | (3) -4 |
| 37 | 4 |
| 72 | 4 |

### Legende:

| Wert | Bedeutung |
|---|---|
| 1 | Folie intakt |
| 2 | Zersetzung sichtbar |
| 3 | Zersetzung fortgeschritten |
| 4 | Folie komplett zersetzt |

Zusätzlich wurden die mechanischen Eigenschaften der Folie überprüft. Die Messungen der Zugfestigkeit und Reißdehnung erfolgten auf einer Tinius Olsen Universalprüfmaschine H10KS. Zur Bestimmung der Foliendicke wurde das Präzisionsdickenmessgerät DM 2000 von Wolf-Messtechnik verwendet. Die Ergebnisse der Messungen sind in Tab. 4 aufgeführt.

**Tab. 4: Mechanische Eigenschaften der Folie**

| Dicke der Folie [µm] | Zugfestigke it (MD) [MPa] | Zugfestigke it (TD) [MPa] | Reißdehnung (MD) [%] | Reißdehnung (TD) [%] |
|---|---|---|---|---|
| 12-27 | 34 | 30,1 | 677 | 878 |

Wie den Tab. 3 und 4 zu entnehmen ist, weist die Folie hervorragende mechanische Eigenschaften zur Verwendung als Transportbeutel sowie eine außergewöhnlich schnelle Zersetzung in Meerwasser auf. Bereits nach etwa einem Monat in Meerwasser hat sich die Folie fast vollständig zersetzt (Tab. 3, Z. 2).

### Beispiel 2:

Mit einem Doppelschneckenextruder des Typs Coperion ZSK 40 (zweiwelliger Schneckenkneter), Schneckendurchmesser 40 mm, L/D = 42, wurde ein Polymerblend mit der in Tab. 5 angegebenen Rezeptur B hergestellt und zu Granulat verarbeitet (dosierte Anteile in Massenprozent):

**Tab. 5: Rezeptur B**

| Verbindung | Menge |
|---|---|
| PCL | 29,7 |
| PHBH | 69,3 |
| Loxiol | 1 |

Dabei wurden folgende Compoundierparameter eingehalten:

**Tab. 6: Temperaturprofil (Doppelschneckenextruder ZSK 40)**

| Zone 1 | Zone 2 | Zone 3 | Zone 4 | Zone 5 | Zone 6 | Zone 7 | Zone 8 | Zone 9 | Zone 10 | Düse |
|---|---|---|---|---|---|---|---|---|---|---|
| 25 °C | 100 °C | 110 °C | 115 °C | 130 °C | 145 °C | 160 °C | 160 °C | 160 °C | 160 °C | 160 °C |

| | |
|---|---|
| Drehzahl | 100 min⁻¹ |
| Durchsatz | 50 kg/h |
| Entgasung | - 0,98 bar, Zone 8 |
| Wassergehalt | 0,13 % |

Aus dem hergestellten Granulat wurden Blasfolien hergestellt. Hierfür wurde das Granulat B mit einem Einwellenextruder des Typs *KABRA,* Schneckendurchmesser 65 mm, L/D = 23, aufgeschmolzen und zu einer Blasfolie verarbeitet.

Die mechanischen Eigenschaften der Folie wurden überprüft. Die Messung wurden mit den gleichen Apparaten wie in Beispiel 1 durchgeführt. Die Ergebnisse der Messung sind in Tab. 7 aufgeführt.

**Tab. 7: Mechanische Eigenschaften der Folie**

| Dicke der Folie [µm] | Zugfestigke it (MD) [MPa] | Zugfestigke it (TD) [MPa] | Reißdehnung (MD) [%] | Reißdehnung (TD) [%] |
|---|---|---|---|---|
| 41-60 | 32,6 | 28,9 | 714 | 669 |

Wie der Tab. 7 zu entnehmen ist, weist die Folie hervorragende mechanische Eigenschaften zur Verwendung als Transportbeutel auf.

### Beispiel 3:

Mit einem Doppelschneckenextruder des Typs Coperion ZSK 40 (zweiwelliger Schneckenkneter), Schneckendurchmesser 40 mm, L/D = 42, wurde ein Polymerblend mit der in Tab. 8 angegebenen Rezeptur C hergestellt und zu Granulat verarbeitet (dosierte Anteile in Massenprozent):

**Tab. 8: Rezeptur C**

| Verbindung | Menge |
|---|---|
| PCL | 19,8 |
| PHBH | 19,8 |
| PBSA | 59,4 |
| Loxiol | 1 |

Dabei wurden folgende Compoundierparameter eingehalten:

**Tab. 9: Temperaturprofil (Doppelschneckenextruder ZSK 40)**

| Zone 1 | Zone 2 | Zone 3 | Zone 4 | Zone 5 | Zone 6 | Zone 7 | Zone 8 | Zone 9 | Zone 10 | Düse |
|---|---|---|---|---|---|---|---|---|---|---|
| 25 °C | 100 °C | 110 °C | 115 °C | 130 °C | 145 °C | 160 °C | 160 °C | 160 °C | 160 °C | 160 °C |

| | |
|---|---|
| Drehzahl | 100 min⁻¹ |
| Durchsatz | 50 kg/h |
| Entgasung | - 0,98 bar, Zone 8 |
| Wassergehalt | 0,07 % |

Aus dem hergestellten Granulat wurden Blasfolien hergestellt. Hierfür wurde das Granulat C mit einem Einwellenextruder des Typs *Collin 30* (*DR. COLLIN*)*,* Schneckendurchmesser 30 mm, L/D = 33, aufgeschmolzen und zu einer Blasfolie verarbeitet. Die mechanischen Eigenschaften der Folie wurden überprüft. Die Messung wurden mit den gleichen Apparaten wie in Beispiel 1 durchgeführt. Die Ergebnisse der Messung sind in Tab. 10 aufgeführt.

**Tab. 10: Mechanische Eigenschaften der Folie**

| Dicke der Folie [µm] | Zugfestigke it (MD) [MPa] | Zugfestigke it (TD) [MPa] | Reißdehnung (MD) [%] | Reißdehnung (TD) [%] |
|---|---|---|---|---|
| 23-35 | 41,2 | 39,5 | 690 | 866 |

Wie der Tab. 10 zu entnehmen ist, weist die Folie hervorragende mechanische Eigenschaften zur Verwendung als Transportbeutel auf.

## Patentansprüche

1. Folie enthaltend 10 bis 50 Gew.-% einer Komponente A und 50 bis 90 Gew.-% einer Komponente B, bezogen auf die Summe der Komponenten A und B,
wobei Komponente A ausgewählt ist aus der Gruppe bestehend aus Polymeren, die aus ringöffnender Polymerisation erhältlich sind und eine Glasübergangstemperatur (Tg) niedriger als -30 °C haben, wobei die Glasübergangstemperatur(Tg) die Mittenpunktstemperatur (T_{mg}) der Stufe des zweiten Aufheizschrittes im DSC Diagramm angibt und die Messung mit Aufheiz-Abkühlraten von jeweils 10°C/min und einer Equilibrierzeit an den Temperaturendpunkten von jeweils zwei Minuten durchgeführt wird und
Komponente B ausgewählt ist aus der Gruppe bestehend aus thermoplastischen aliphatischen Copolyestern und Mischungen davon,
wobei die Folie als einschichtige Folie ausgebildet ist,
wobei die Folie eine Gesamtdicke von 1 bis 200 um sowie mindestens eine der folgenden mechanischen Eigenschaften aufweist:
- Zugfestigkeit in trockenem Zustand in Extrusionsrichtung (MD) von mindestens 15 MPa gemäß EN ISO 527;
- Zugfestigkeit in trockenem Zustand quer zur Extrusionsrichtung (TD) von mindestens 15 MPa gemäß EN ISO 527;
- Reißdehnung in trockenem Zustand in Extrusionsrichtung (MD) von mindestens 100% gemäß EN ISO 527;
- Reißdehnung in trockenem Zustand quer zur Extrusionsrichtung (TD) von mindestens 100% gemäß EN ISO 527;
und
wobei die Folie nach Einbringen in Salzwasser für einen Zeitraum von 12 Wochen unter kontrollierten Testbedingungen, gemäß der Methode ASTM D6691-09, nach Sieben durch ein Sieb mit einer Maschenweite von 2,0 mm maximal 30 Gew.-% des ursprünglichen Trockengewichts aufweist und/oder wobei mindestens 30% des organischen Kohlenstoffs der Folie nach Einbringen in Salzwasser innerhalb von 180 Tagen bei einer Temperatur von 30 ± 2°C, gemäß der Methode ASTM D6691-09, in Kohlenstoffdioxid umgesetzt sind.

2. Folie gemäß Anspruch 1, **dadurch gekennzeichnet, dass** Komponente A eine Glasübergangstemperatur (Tg) niedriger als -40°C, insbesondere niedriger als -50°C oder niedriger als -55°C aufweist, und/oder dass Komponente A ein Polyester ist, und/oder dass Komponente A Polycaprolacton ist, und/oder dass Komponente B ausgewählt ist aus der Gruppe bestehend aus thermoplastischen aliphatischen Copolyestern mit n Kohlenstoffatomen pro Monomereinheit, wobei n 4 bis 10, 4 bis 8 oder 4 bis 6, beträgt.

3. Folie gemäß einem der vorstehenden Ansprüche, **dadurch gekennzeichnet, dass** Komponente B ausgewählt ist aus der Gruppe bestehend aus Poly(3-hydroxybutyrat-co-3-hydroxyvalerat), Poly(3-hydroxybutyrat-co-3-hexanoat), Polybutylensuccinat, Poly(butylenadipat-co-succinat) und Mischungen davon, und/oder
dass Komponente B Poly(3-hydroxybutyrat-co-3-hexanoat) und/oder Poly(butylenadipat-co-succinat) ist.

4. Folie gemäß einem der vorstehenden Ansprüche, **dadurch gekennzeichnet, dass** die Folie 0,1 bis 30 Gew.-%, 1 bis 25 Gew.-%, 3 bis 20 Gew.-%, 4 bis 15 Gew.-%, 5 bis 12 Gew.-%, 15 bis 25 Gew.-%, 17 bis 23 Gew.-% oder 18 bis 22 Gew.-% Poly(butylenadipat-co-terephthalat), bezogen auf das Gesamtgewicht, umfasst, und/oder
dass die Folie 0,1 bis 30 Gew.-%, 1 bis 25 Gew.-%, 3 bis 20 Gew.-%, 4 bis 15 Gew.-%, 5 bis 12 Gew.-%, 15 bis 25 Gew.-%, 17 bis 23 Gew.-% oder 18 bis 22 Gew.-% Poly(butylensebacat-co-terephthalat), bezogen auf das Gesamtgewicht, umfasst, und/oder
dass die Folie 0,1 bis 20 Gew.-%, 2 bis 18 Gew.-%, 5 bis 15 Gew.-% oder 8 bis 12 Gew.-% Stärke, insbesondere thermoplastische Stärke, bezogen auf das Gesamtgewicht, umfasst, und/oder
dass die Folie eine Gesamtdicke von 5 bis 200 um, 10 bis 80 um oder 15 bis 60 um, aufweist, und/oder
dass die Folie 20 bis 40 Gew.-%, 25 bis 40 Gew.-%, 25 bis 35 Gew.-% oder 28 bis 32 Gew.-%, der Komponente A, bezogen auf die Summe von Komponenten A und B, umfasst, und/oder
dass die Folie 60 bis 80 Gew.-%, 60 bis 75 Gew.-%, 65 bis 75 Gew.-% oder 68 bis 72 Gew.-%, der Komponente B, bezogen auf die Summe von Komponenten A und B, umfasst.

5. Folie gemäß einem der vorstehenden Ansprüche, **dadurch gekennzeichnet, dass** die Folie eine Zugfestigkeit in trockenem Zustand in Extrusionsrichtung (MD) von mindestens 20 MPa, insbesondere von mindestens 25 MPa, gemäß EN ISO 527, aufweist, und/oder
dass die Folie eine Zugfestigkeit in trockenem Zustand quer zur Extrusionsrichtung (TD) von mindestens 20 MPa, insbesondere von mindestens 25 MPa, gemäß EN ISO 527, aufweist, und/oder
dass die Folie eine Reißdehnung in trockenem Zustand in Extrusionsrichtung (MD) von mindestens 200%, mindestens 300% oder mindestens 400%, gemäß EN ISO 527, aufweist, und/oder
dass die Folie eine Reißdehnung in trockenem Zustand quer zur Extrusionsrichtung (TD) von mindestens 200%, mindestens 300% oder mindestens 400%, gemäß EN ISO 527, aufweist, und/oder
dass der organische Kohlenstoff der Folie nach Einbringen in Salzwasser innerhalb von 180 Tagen bei 30 ± 2°C, gemäß der Methode ASTM D6691-09, zu mindestens 40%, insbesondere zu mindestens 50%, zu Kohlenstoffdioxid umgesetzt ist, und/oder
dass die Folie nach Einbringen in Salzwasser für einen Zeitraum von 12 Wochen unter kontrollierten Testbedingungen, gemäß der Methode ASTM D6691-09, nach Sieben durch ein Sieb mit einer Maschenweite von 2,0 mm maximal 20 Gew.-%, insbesondere maximal 10 Gew.-% des ursprünglichen Trockengewichts aufweist, und/oder
dass der organische Kohlenstoff der Folie in aktiven Abbaubedingungen gemäß der Methode DIN EN ISO 14855-1:2012 innerhalb von 180 Tagen zu mindestens 70%, zu mindestens 80% oder zu mindestens 90%, in Kohlenstoffdioxid umgesetzt wurde.

6. Verwendung eines Polymerblends enthaltend 10 bis 50 Gew.-% einer Komponente A und 50 bis 90 Gew.-% einer Komponente B, bezogen auf die Summe der Komponenten A und B,
wobei Komponente A ausgewählt ist aus der Gruppe bestehend aus Polymeren, die aus ringöffnender Polymerisation erhältlich sind und eine Glasübergangstemperatur (Tg) niedriger als -30 °C haben, wobei als Glasübergangstemperatur (Tg) die Mittenpunktstemperatur (T_{mg}) der Stufe des zweiten Aufheizschrittes im DCS Diagramm angegeben ist und die Messung mit Aufheiz-Abkühlraten von jeweils 10 °C/min und einer Equilibrierzeit an den Temperaturendpunkten von jeweils zwei Minuten durchgeführt wird und Komponente B ausgewählt ist aus der Gruppe bestehend aus thermoplastischen aliphatischen Copolyestern und Mischungen davon,
zur Herstellung einer Folie mit einer Gesamtdicke von 1 bis 200 um und mindestens einer der folgenden mechanischen Eigenschaften:
- Zugfestigkeit in trockenem Zustand in Extrusionsrichtung (MD) von mindestens 15 MPa gemäß EN ISO 527;
- Zugfestigkeit in trockenem Zustand quer zur Extrusionsrichtung (TD) von mindestens 15 MPa gemäß EN ISO 527;
- Reißdehnung in trockenem Zustand in Extrusionsrichtung (MD) von mindestens 100% gemäß EN ISO 527;
- Reißdehnung in trockenem Zustand quer zur Extrusionsrichtung (TD) von mindestens 100% gemäß EN ISO 527;
wobei die Folie als einschichtige Folie ausgebildet ist, und wobei die Folie nach Einbringen in Salzwasser für einen Zeitraum von 12 Wochen unter kontrollierten Testbedingungen, gemäß der Methode ASTM D6691-09, nach Sieben durch ein Sieb mit einer Maschenweite von 2,0 mm maximal 30 Gew.-% des ursprünglichen Trockengewichts aufweist und/oder wobei mindestens 30% des organischen Kohlenstoffs der Folie nach Einbringen in Salzwasser innerhalb von 180 Tagen bei einer Temperatur von 30 ± 2°C, gemäß der Methode ASTM D6691-09, in Kohlenstoffdioxid umgesetzt sind.

7. Verwendung nach Anspruch 6, **dadurch gekennzeichnet, dass** Komponente A wie in Anspruch 2 definiert ist und/oder dass Komponente B wie in einem der Ansprüche 2 bis 3 definiert ist, und/oder
dass der Polymerblend 20 bis 40 Gew.-%, insbesondere 25 bis 40 Gew.-%, 25 bis 35 Gew.-% oder 28 bis 32 Gew.-% der Komponente A, bezogen auf die Summe der Komponenten A und B, und/oder 60 bis 80 Gew.-%, insbesondere 60 bis 75 Gew.-%, 65 bis 75 Gew.-% oder 68 bis 72 Gew.-% der Komponente B enthält, bezogen auf die Summe der Komponenten A und B.

8. Transportbeutel enthaltend eine Folie gemäß einem der Ansprüche 1 bis 5.

9. Transportbeutel gemäß Anspruch 8, **dadurch gekennzeichnet, dass** der Transportbeutel ausgewählt ist aus der Gruppe bestehend aus Tragetasche, Obstbeutel, Gemüsebeutel, Light T-Shirt Bag und Ultra-Light T-Shirt Bag, und/oder
dass der Transportbeutel ein Gewicht von 1 bis 90 g, 2 bis 50 g, 20 bis 40 g, 1 bis 10 g oder 1,5 bis 5 g aufweist.

10. Verfahren zur Herstellung einer Folie gemäß einem der Ansprüche 1 bis 5, **gekennzeichnet durch** folgende Schritte:
a.Bereitstellen eines Polymerblends enthaltend 10 bis 50 Gew.-% einer Komponente A und 50 bis 90 Gew.-% einer Komponente B, bezogen auf die Summe der Komponenten A und B,
wobei Komponente A ausgewählt ist aus der Gruppe bestehend aus Polymeren, die aus ringöffnender Polymerisation erhältlich sind und eine Glasübergangstemperatur (Tg) niedriger als -30 °C haben,wobei als Glasübergangstemperatur (Tg) die Mittenpunktstemperatur (T_{mg}) der Stufe des zweiten Aufheizschrittes im DCS Diagramm angegeben ist und die Messung mit Aufheiz-Abkühlraten von jeweils 10 °C/min und einer Equilibrierzeit an den Temperaturendpunkten von jeweils zwei Minuten durchgeführt wird und
Komponente B ausgewählt ist aus der Gruppe bestehend aus thermoplastischen aliphatischen Copolyestern und Mischungen davon;
b. Ausbilden einer Folie aus dem Polymerblend gemäß Schritt a,
wobei die Folie als einschichtige Folie ausgebildet ist, wobei die Folie eine Gesamtdicke von 1 bis 200 um sowie mindestens eine der folgenden mechanischen Eigenschaften aufweist:
- Zugfestigkeit in trockenem Zustand in Extrusionsrichtung (MD) von mindestens 15 MPa gemäß EN ISO 527;
- Zugfestigkeit in trockenem Zustand quer zur Extrusionsrichtung (TD) von mindestens 15 MPa gemäß EN ISO 527;
- Reißdehnung in trockenem Zustand in Extrusionsrichtung (MD) von mindestens 100% gemäß EN ISO 527;
- Reißdehnung in trockenem Zustand quer zur Extrusionsrichtung (TD) von mindestens 100% gemäß EN ISO 527;
und
wobei die Folie nach Einbringen in Salzwasser für einen Zeitraum von 12 Wochen unter kontrollierten Testbedingungen, gemäß der Methode ASTM D6691-09, nach Sieben durch ein Sieb mit einer Maschenweite von 2,0 mm maximal 30 Gew.-% des ursprünglichen Trockengewichts aufweist und/oder wobei mindestens 30% des organischen Kohlenstoffs der Folie nach Einbringen in Salzwasser innerhalb von 180 Tagen bei einer Temperatur von 30 ± 2°C, gemäß der Methode ASTM D6691-09, in Kohlenstoffdioxid umgesetzt sind.

11. Verfahren gemäß Anspruch 10, **dadurch gekennzeichnet, dass** das Verfahren einen Coextrusionsschritt umfasst, und/oder
dass das Verfahren einen Kaschierungsschritt umfasst, und/oder
dass Komponente A wie in Anspruch 2 definiert ist und/oder dass Komponente B wie in einem der Ansprüche 2 bis 3 definiert ist, und/oder
dass der Polymerblend 20 bis 40 Gew.-%, insbesondere 25 bis 40 Gew.-%, 25 bis 35 Gew.-% oder 28 bis 32 Gew.-% der Komponente A, bezogen auf die Komponenten A und B, und/oder 60 bis 80 Gew.-%, insbesondere 60 bis 75 Gew.%, 65 bis 75 Gew.-% oder 68 bis 72 Gew.-% der Komponente B enthält, bezogen auf die Summe der Komponenten A und B.

12. Verwendung einer Folie gemäß einem der Ansprüche 1 bis 5 zur Herstellung eines Transportbeutels.

## Claims

1. Film containing 10 to 50 wt.% of a component A and 50 to 90 wt.% of a component B, based on the sum of the components A and B,
wherein component A is selected from the group consisting of polymers that are obtainable from ring-opening polymerization and have a glass transition temperature (Tg) lower than -30°C, wherein the glass transition temperature is the mid-point temperature T_{mg} of the stage of the second heating step in the DSC diagram and the measurement was carried out with heating and cooling rates of 10°C/min in each case and with an equilibration time at the temperature end points of 2 minutes in each case and
component B is selected from the group consisting of thermoplastic aliphatic copolyesters and mixtures thereof,
wherein the film is formed as a single-layer film,
wherein the film has a total thickness of 1 to 200 µm and at least one of the following mechanical properties:
- tensile strength in the dry state in the extrusion direction (MD) of at least 15 MPa according to EN ISO 527;
- tensile strength in the dry state transversely to the extrusion direction (TD) of at least 15 MPa according to EN ISO 527;
- elongation at tear in the dry state in the extrusion direction (MD) of at least 100% according to EN ISO 527;
- elongation at tear in the dry state transversely to the extrusion direction (TD) of at least 100% according to EN ISO 527;
and wherein after introduction into salt water for a period of 12 weeks under controlled test conditions, according to the method ASTM D6691-09, and after sieving through a sieve having a mesh size of 2.0 mm, the film has a maximum of 30 wt.% of the original dry weight, and/or wherein after introduction into salt water, at least 30% of the organic carbon of the film is converted to carbon dioxide within 180 days at a temperature of 30 ± 2°C, according to the method ASTM D6691-09.

2. Film according claim 1, **characterized in that** component A has a glass transition temperature (Tg) lower than -40°C, in particular lower than -50°C or lower than -55°C,
and/or **in that** component A is a polyester,
and/or **in that** component A is polycaprolactone,
and/or **in that** component B is selected from the group consisting of thermoplastic aliphatic copolyesters having n carbon atoms per monomer, where n is 4 to 10, 4 to 8 or 4 to 6.

3. Film according to any of the preceding claims,
**characterized in that** component B is selected from the group consisting of poly(3-hydroxybutyrate-co-3-hydroxyvalerate), poly(3-hydroxybutyrate-co-3-hexanoate), polybutylene succinate, poly(butylene adipate-co-succinate), and mixtures thereof,
and/or **in that** component B is poly(3-hydroxybutyrate-co-3-hexanoate) and/or poly(butylene adipate-co-succinate).

4. Film according to any of the preceding claims,
**characterized in that** the film comprises 0.1 to 30 wt.%, 1 to 25 wt.%, 3 to 20 wt.%, 4 to 15 wt.%, 5 to 12 wt.%, 15 to 25 wt.%, 17 to 23 wt.% or 18 to 22 wt.% poly(butylene adipate-co-terephthalate), based on the total weight,
and/or **in that** the film comprises 0.1 to 30 wt.%, 1 to 25 wt.%, 3 to 20 wt.%, 4 to 15 wt.%, 5 to 12 wt.%, 15 to 25 wt.%, 17 to 23 wt.% or 18 to 22 wt.% poly(butylene sebacate-co-terephthalate), based on the total weight, and/or **characterized in that** the film comprises 0.1 to 20 wt.%, 2 to 18 wt.%, 5 to 15 wt.% or 8 to 12 wt.% starch, in particular thermoplastic starch, based on the total weight,
and/or **in that** the film has a total thickness of 5 to 200 µm, 10 to 80 um or 15 to 60 µm,
and/or **in that** the film comprises 20 to 40 wt.%, 25 to 40 wt.%, 25 to 35 wt.% or 28 to 32 wt.% of component A, based on the sum of components A and B,
and/or **in that** the film comprises 60 to 80 wt.%, 60 to 75 wt.%, 65 to 75 wt.% or 68 to 72 wt.% of component B, based on the sum of components A and B.

5. Film according to any of the preceding claims,
**characterized in that** the film has a tensile strength in the dry state in the extrusion direction (MD) of at least 20 MPa, in particular of at least 25 MPa, according to EN ISO 527,
and/or **in that** the film has a tensile strength in the dry state transversely to the extrusion direction (TD) of at least 20 MPa, in particular of at least 25 MPa, according to EN ISO 527,
and/or **in that** the film has an elongation at tear in the dry state in the extrusion direction (MD) of at least 200%, at least 300% or at least 400%, according to EN ISO 527,
and/or **in that** the film has an elongation at tear in the dry state transversely to the extrusion direction (TD) of at least 200%, at least 300% or at least 400%, according to EN ISO 527,
and/or **in that** after introduction into salt water, at least 40%, in particular at least 50%, of the organic carbon of the film is converted to carbon dioxide within 180 days at 30 ± 2°C, according to the method ASTM D6691-09,
and/or **in that** after introduction into salt water for a period of 12 weeks under controlled test conditions, according to the method ASTM D6691-09, and after sieving through a sieve having a mesh size of 2.0 mm, the film has a maximum of 20 wt.%, in particular a maximum of 10 wt.%, of the original dry weight,
and/or **in that** in active decomposition conditions according to the method DIN EN ISO 14855-1:2012, at least 70%, at least 80% or at least 90% of the organic carbon of the film was converted into carbon dioxide within 180 days.

6. Use of a polymer blend containing 10 to 50 wt.% of a component A and 50 to 90 wt.% of a component B, based on the sum of the components A and B,
wherein component A is selected from the group consisting of polymers that are obtainable from ring-opening polymerization and have a glass transition temperature (Tg) lower than -30°C, wherein the glass transition temperature is the mid-point temperature T_{mg} of the stage of the second heating step in the DSC diagram and the measurement was carried out with heating and cooling rates of 10°C/min in each case and with an equilibration time at the temperature end points of 2 minutes in each case and component B is selected from the group consisting of thermoplastic aliphatic copolyesters and mixtures thereof,
for producing a film having a total thickness of from 1 to 200 um and at least one of the following mechanical properties:
- tensile strength in the dry state in the extrusion direction (MD) of at least 15 MPa according to EN ISO 527;
- tensile strength in the dry state transversely to the extrusion direction (TD) of at least 15 MPa according to EN ISO 527;
- elongation at tear in the dry state in the extrusion direction (MD) of at least 100% according to EN ISO 527;
- elongation at tear in the dry state transversely to the extrusion direction (TD) of at least 100% according to EN ISO 527;
wherein the film is formed as a single-layer film,
and wherein after introduction into salt water for a period of 12 weeks under controlled test conditions, according to the method ASTM D6691-09, and after sieving through a sieve having a mesh size of 2.0 mm, the film has a maximum of 30 wt.% of the original dry weight, and/or wherein after introduction into salt water, at least 30% of the organic carbon of the film is converted to carbon dioxide within 180 days at a temperature of 30 ± 2°C, according to the method ASTM D6691-09.

7. Use according to claim 6, **characterized in that** component A is as defined in claim 2 and/or **in that** component B is as defined in any of claims 2 to 3,
and/or **in that** the polymer blend contains 20 to 40 wt.%,in particular 25 to 40 wt.%, 25 to 35 wt.% or 28 to 32 wt.%, of component A, based on the sum of components A and B, and/or 60 to 80 wt.%, in particular 60 to 75 wt.%, 65 to 75 wt.% or 68 to 72 wt.%, of component B, based on the sum of components A and B.

8. Transport bag containing a film according to any of claims 1 to 5.

9. Transport bag according to claim 8, **characterized in that** the transport bag is selected from the group consisting of carrier bag, fruit bag, vegetable bag, light T-Shirt bag and ultra-light T-Shirt bag and/or **in that** the transport bag has a weight of 1 to 90 g, 2 to 50 g, 20 to 40 g, 1 to 10 g or 1.5 to 5 g.

10. Method for producing a film according to any of claims 1 to 5, **characterized by** the following steps:
a. providing a polymer blend containing 10 to 50 wt.% of a component A and 50 to 90 wt.% of a component B, based on the sum of the components A and B,
wherein component A is selected from the group consisting of polymers that are obtainable from ring-opening polymerization and have a glass transition temperature (Tg) lower than -30°C, wherein the glass transition temperature is the mid-point temperature T_{mg} of the stage of the second heating step in the DSC diagram and the measurement was carried out with heating and cooling rates of 10°C/min in each case and with an equilibration time at the temperature end points of 2 minutes in each case and component B is selected from the group consisting of thermoplastic aliphatic copolyesters and mixtures thereof;
b. forming a film from the polymer blend according to step a,
wherein the film is formed as a single-layer film, wherein the film has a total thickness of 1 to 200 µm and at least one of the following mechanical properties:
- tensile strength in the dry state in the extrusion direction (MD) of at least 15 MPa according to EN ISO 527;
- tensile strength in the dry state transversely to the extrusion direction (TD) of at least 15 MPa according to EN ISO 527;
- elongation at tear in the dry state in the extrusion direction (MD) of at least 100% according to EN ISO 527;
- elongation at tear in the dry state transversely to the extrusion direction (TD) of at least 100% according to EN ISO 527
and wherein after introduction into salt water for a period of 12 weeks under controlled test conditions, according to the method ASTM D6691-09, and after sieving through a sieve having a mesh size of 2.0 mm, the film has a maximum of 30 wt.% of the original dry weight, and/or wherein after introduction into salt water, at least 30% of the organic carbon of the film is converted to carbon dioxide within 180 days at a temperature of 30 ± 2°C, according to the method ASTM D6691-09.

11. Method according to claim 10, **characterized in that** the method comprises a coextrusion step,
and/or **in that** the method comprises a lamination step,
and/or **in that** component A is as defined in claim 2
and/or **in that** component B is as defined in any of claims 2 to 3,
and/or **in that** the polymer blend contains 20 to 40 wt.%, in particular 25 to 40 wt.%, 25 to 35 wt.% or 28 to 32 wt.%, of component A, based on the sum of components A and B, and/or 60 to 80 wt.%, in particular 60 to 75 wt.%, 65 to 75 wt.% or 68 to 72 wt.%, of component B, based on the sum of components A and B.

12. Use of a film according to any of claims 1 to 5 for the production of a transport bag.

## Revendications

1. Film contenant 10 à 50 % en poids d'un composant A et 50 à 90 % en poids d'un composant B, par rapport à la somme des composants A et B,
le composant A étant choisi dans le groupe constitué de polymères pouvant être obtenus par polymérisation par ouverture de cycle et ayant une température de transition vitreuse (Tg) inférieure à -30 °C, la température de transition vitreuse (Tg) indiquant la température du point milieu (T_{mg}) de la phase de la deuxième étape de chauffage dans le diagramme DSC et la mesure étant réalisée avec des taux de chauffe et de refroidissement de respectivement 10 °C/min et un temps d'équilibrage aux points terminaux de température de respectivement deux minutes et
le composant B étant choisi dans le groupe constitué de copolyesters aliphatiques thermoplastiques et des mélanges de ceux-ci,
le film étant réalisé comme un film monocouche,
le film présentant une épaisseur totale de 1 à 200 µm ainsi qu'au moins une des propriétés mécaniques suivantes :
- résistance à la traction à l'état sec dans la direction d'extrusion (MD) d'au moins 15 MPa selon la norme EN ISO 527 ;
- résistance à la traction à l'état sec perpendiculairement à la direction d'extrusion (TD) d'au moins 15 MPa selon la norme EN ISO 527 ;
- allongement à la rupture à l'état sec dans la direction d'extrusion (MD) d'au moins 100 % selon la norme EN ISO 527 ;
- allongement à la rupture à l'état sec perpendiculairement à la direction d'extrusion (TD) d'au moins 100 % selon la norme EN ISO 527 ;
et
le film, après immersion dans de l'eau de mer pendant une période de temps de 12 semaines dans des conditions d'essai contrôlées, selon le procédé ASTM D6691-09, présentant après le tamisage à travers un tamis ayant un maillage de 2,0 mm au maximum 30 % en poids du poids sec initial et/ou au moins 30 % du carbone organique du film, après immersion dans de l'eau de mer, étant convertis en dioxyde de carbone dans un délai de 180 jours à une température de 30 ± 2 °C, selon le procédé ASTM D6691-09.

2. Film selon la revendication 1, **caractérisé en ce que** le composant A présente une température de transition vitreuse (Tg) inférieure à -40 °C, en particulier inférieure à -50 °C ou inférieure à -55 °C, et/ou **en ce que** le composant A est un polyester, et/ou **en ce que** le composant A est un polycaprolacton, et/ou **en ce que** le composant B est choisi dans le groupe constitué de copolyesters aliphatiques thermoplastiques ayant n atomes de carbone par unité de monomère, n étant de 4 à 10, de 4 à 8 ou de 4 à 6.

3. Film selon l'une quelconque des revendications précédentes précédentes, **caractérisé en ce que** le composant B est choisi dans le groupe constitué de poly(3-hydroxybutyrate-co-3-hydroxyvalerate), poly(3-hydroxybutyrate-co-3-hexanoate), polybutylène-succinate, poly(butylenadipat-co-succinate) et des mélanges de ceux-ci, et/ou **en ce que** le composant B est poly(3-hydroxybutyrate-co-3-hexanoate) et/ou poly(butylenadipat-co-succinate).

4. Film selon l'une quelconque des revendications précédentes, **caractérisé en ce que** le film comprend 0,1 à 30 % en poids, 1 à 25 % en poids, 3 à 20 % en poids, 4 à 15 % en poids, 5 à 12 % en poids, 15 à 25 % en poids, 17 à 23 % en poids ou 18 à 22 % en poids de poly(butylenadipat-co-téréphtalate), par rapport au poids total, et/ou
**en ce que** le film comprend 0,1 à 30 % en poids, 1 à 25 % en poids, 3 à 20 % en poids, 4 à 15 % en poids, 5 à 12 % en poids, 15 à 25 % en poids, 17 à 23 % en poids ou 18 à 22 % en poids de poly(butylensebacat-co-téréphtalate), par rapport au poids total, et/ou
**en ce que** le film comprend 0,1 à 20 % en poids, 2 à 18 % en poids, 5 à 15 % en poids, ou 8 à 12 % en poids d'amidon, en particulier d'amidon thermoplastique, par rapport au poids total, et/ou
**en ce que** le film présente une épaisseur totale de 5 à 200 µm, 10 à 80 µm ou 15 à 60 µm, et/ou **en ce que** le film comprend 20 à 40 % en poids, 25 à 40 % en poids, 25 à 35 % en poids ou 28 à 32 % en poids, du composant A, par rapport à la somme des composants A et B, et/ou
**en ce que** le film comprend 60 à 80 % en poids, 60 à 75 % en poids, 65 à 75 % en poids ou 68 à 72 % en poids, du composant B, par rapport à la somme des composants A et B.

5. Film selon l'une quelconque des revendications précédentes, **caractérisé en ce que** le film présente une résistance à la traction à l'état sec dans la direction d'extrusion (MD) d'au moins 20 MPa, en particulier d'au moins 25 MPa, selon la norme EN ISO 527, et/ou
**en ce que** le film présente une résistance à la traction à l'état sec perpendiculairement à la direction d'extrusion (TD) d'au moins 20 MPa, en particulier d'au moins 25 MPa, selon la norme EN ISO 527, et/ou
**en ce que** le film présente un allongement à la rupture à l'état sec dans la direction d'extrusion (MD) d'au moins 200 %, d'au moins 300 % ou d'au moins 400 %, selon la norme EN ISO 527, et/ou
**en ce que** le film présente un allongement à la rupture à l'état sec perpendiculairement à la direction d'extrusion (TD) d'au moins 200 %, d'au moins 300 % ou d'au moins 400 %, selon la norme EN ISO 527, et/ou
**en ce que** le carbone organique du film, après immersion dans de l'eau salée, est converti dans un délai de 180 jours à 30 ± 2 °C, selon le procédé ASTM D6691-09, à au moins 40 %, en particulier à au moins 50 %, en dioxyde de carbone, et/ou **en ce que** le film, après immersion dans de l'eau salée pour une période de temps de 12 semaines dans des conditions d'essai contrôlées, selon le procédé ASTM D6691-09, présente après le tamisage à travers un tamis ayant un maillage de 2,0 mm au maximum 20 % en poids, en particulier au maximum 10 % en poids, du poids sec initial, et/ou **en ce que** le carbone organique du film, dans des conditions de dégradation actives selon le procédé ASTM D6691-09, est converti dans un délai de 180 jours à au moins 70 %, en particulier à au moins 80 % ou à au moins 90 %, en dioxyde de carbone.

6. Utilisation d'un mélange de polymères contenant 10 à 50 % en poids d'un composant A et 50 à 90 % en poids d'un composant B, par rapport à la somme des composants A et B,
le composant A étant choisi dans le groupe constitué de polymères pouvant être obtenus par polymérisation par ouverture de cycle et
ayant une température de transition vitreuse (Tg) inférieure à -30 °C, la température de transition vitreuse (Tg) indiquant la température du point milieu (T_{mg}) de la phase de la deuxième étape de chauffage dans le diagramme DSC et la mesure étant réalisée avec des taux de chauffe et de refroidissement de respectivement 10 °C/min et un temps d'équilibrage aux points terminaux de température de respectivement deux minutes et le composant B étant choisi dans le groupe constitué de copolyesters aliphatiques thermoplastiques et des mélanges de ceux-ci,
pour la fabrication d'un film présentant une épaisseur totale de 1 à 200 µm ainsi qu'au moins une des propriétés mécaniques suivantes :
- résistance à la traction à l'état sec dans la direction d'extrusion (MD) d'au moins 15 MPa selon la norme EN ISO 527 ;
- résistance à la traction à l'état sec perpendiculairement à la direction d'extrusion (TD) d'au moins 15 MPa selon la norme EN ISO 527 ;
- allongement à la rupture à l'état sec dans la direction d'extrusion (MD) d'au moins 100 % selon la norme EN ISO 527 ;
- allongement à la rupture à l'état sec perpendiculairement à la direction d'extrusion (TD) d'au moins 100 % selon la norme EN ISO 527 ;
le film étant réalisé comme un film monocouche, et le film, après immersion dans de l'eau de mer pendant une période de temps de 12 semaines dans des conditions d'essai contrôlées, selon le procédé ASTM D6691-09, présentant après le tamisage à travers un tamis ayant un maillage de 2,0 mm au maximum 30 % en poids du poids sec initial et/ou au moins 30 % du carbone organique du film, après immersion dans de l'eau de mer, étant convertis en dioxyde de carbone dans un délai de 180 jours à une température de 30 ± 2 °C, selon le procédé ASTM D6691-09.

7. Utilisation selon la revendication 6, **caractérisée en ce que** le composant A est tel que défini dans la revendication 2 et/ou **en ce que** le composant B est tel que défini dans les revendications 2 à 3, et/ou
**en ce que** le mélange de polymères contient 20 à 40 % en poids, 25 à 40 % en poids, 25 à 35 % en poids ou 28 à 32 % en poids, du composant A, par rapport à la somme des composants A et B, et/ou 60 à 80 % en poids, 60 à 75 % en poids, 65 à 75 % en poids ou 68 à 72 % en poids, du composant B, par rapport à la somme des composants A et B.

8. Sac de transport contenant un film selon l'une quelconque des revendications 1 à 5.

9. Sac de transport selon la revendication 8, **caractérisé en ce que** le sac de transport est choisi
dans le groupe constitué de sac cabas, de sachet pour fruits, de sachet pour légumes, sac léger pour T-shirt et sac ultra léger pour T-shirt, et/ou
**en ce que** le sac de transport présente un poids de 1 à 90 g, de 2 à 50 g, de 20 à 40 g, de 1 à 10 g ou de 1,5 à 5 g.

10. Procédé pour la production d'un film selon l'une quelconque des revendications 1 à 5, **caractérisé par** les étapes suivantes :
a. fourniture d'un mélange de polymères contenant de 10 à 50 % en poids d'un composant A et de 50 à 90 % en poids d'un composant B, par rapport à la somme des composants A et B,
le composant A étant choisi dans le groupe constitué de polymères pouvant être obtenus par polymérisation par ouverture de cycle et ayant une température de transition vitreuse (Tg) inférieure à -30 °C, la température du point milieu (T_{mg}) de la phase de la deuxième étape de chauffage dans le diagramme DSC étant indiquée en tant que la température de transition vitreuse (Tg) et la mesure étant réalisée avec des taux de chauffe et de refroidissement de respectivement 10 °C/min et un temps d'équilibrage aux points terminaux de température de respectivement deux minutes et
le composant B étant choisi dans le groupe constitué de copolyesters aliphatiques thermoplastiques et des mélanges de ceux-ci ;
b. formation d'un film à partir du mélange de polymères selon l'étape a,
le film étant réalisé comme un film monocouche, le film présentant une épaisseur totale de 1 à 200 µm ainsi qu'au moins une des propriétés mécaniques suivantes :
- résistance à la traction à l'état sec dans la direction d'extrusion (MD) d'au moins 15 MPa selon la norme EN ISO 527 ;
- résistance à la traction à l'état sec perpendiculairement à la direction d'extrusion (TD) d'au moins 15 MPa selon la norme EN ISO 527 ;
- allongement à la rupture à l'état sec dans la direction d'extrusion (MD) d'au moins 100 % selon la norme EN ISO 527 ;
- allongement à la rupture à l'état sec perpendiculairement à la direction d'extrusion (TD) d'au moins 100 % selon la norme EN ISO 527 ;
et
le film, après immersion dans de l'eau de mer pendant une période de temps de 12 semaines dans des conditions d'essai contrôlées, selon le procédé ASTM D6691-09, présentant après le tamisage à travers un tamis ayant un maillage de 2,0 mm au maximum 30 % en poids du poids sec initial et/ou au moins 30 % du carbone organique du film, après immersion dans de l'eau de mer, étant convertis en dioxyde de carbone dans un délai de 180 jours à une température de 30 ± 2 °C, selon le procédé ASTM D6691-09.

11. Procédé selon la revendication 10, **caractérisé en ce que** le procédé comprend une étape de coextrusion, et/ou
le procédé comprend une étape de pelliculage, et/ou
**en ce que** le composant A est tel que défini dans la revendication 2 et/ou **en ce que** le composant B est tel que défini dans les revendications 2 à 3, et/ou
**en ce que** le mélange de polymères contient 20 à 40 % en poids, 25 à 40 % en poids, 25 à 35 % en poids ou 28 à 32 % en poids, du composant A, par rapport à la somme des composants A et B, et/ou 60 à 80 % en poids, 60 à 75 % en poids, 65 à 75 % en poids ou 68 à 72 % en poids, du composant B, par rapport à la somme des composants A et B.

12. Utilisation d'un film selon l'une quelconque des revendications 1 à 5 pour la fabrication d'un sac de transport.
